# EUROPEAN PATENT APPLICATION

(11) **EP 4 067 452 A1**
(43) Date of publication of application: **05.10.2022**
(21) Application number: 20891576.9
(22) Date of filing: 02.11.2020
(51) Int. Cl.: C09J 163/00, C09D 5/03, C09D 7/40

(54) **METHOD FOR MANUFACTURING ULTRA-LOW-TEMPERATURE, FAST-CURABLE EPOXY RESIN, AND POWDER COATING COMPOSITION COMPRISING RESIN MANUFACTURED THEREBY**

(30) Priority: 29.11.2019 KR 20190157225; 14.10.2020 KR 20200132383
(71) Applicant: Kukdo Chemical Co., Ltd., Geumcheon-gu, Seoul 08588 (KR)
(72) Inventor: KIM, Joo-han, Seoul 08588 (KR); GU, Sol-a, Seoul 08588 (KR)
(74) Representative: Beck & Rössig European Patent Attorneys
(86) International application number: PCT/KR2020/015107
(87) International publication number: WO 2021/107428

(57) **Abstract**

The present disclosure relates to a method for manufacturing an ultra-low-temperature, fast-curable epoxy resin and a powder coating composition comprising a resin manufactured thereby and, specifically, to a method for manufacturing an ultra-low-temperature, fast-curable epoxy resin and a powder coating composition comprising a resin manufactured thereby, wherein the epoxy resin is curable in conditions of 110-130°C/10 min and thus can be used even in a material, of which the temperature is difficult to raise or which is sensitive to heat.

## Description

### [Technical Field]

The present disclosure relates to a method for manufacturing an ultra-low-temperature, fast-curable epoxy resin and a powder coating composition comprising a resin manufactured thereby and, specifically, to a method for manufacturing an ultra-low-temperature, fast-curable epoxy resin which allows to obtain desired physical properties even if the resin cures fast at a low temperature (110 to 130 °C/10 mins), and a powder coating composition comprising a resin manufactured thereby.

### [Background Art]

Powder coating is a type of coating that is formed by applying a powder coating composition to a surface to be coated, without using a volatile dispersing agent such as an organic solvent or water, and then melting it by heat. A thick coating film can be obtained simply by a single application, and coatings that are not applied in the process can be collected and reused. Also, powder coatings contain no organic solvents at all and release little or no amount of volatile organic compounds (VOCs), which makes the powder coatings suitable for environmental protection, and provides excellent durability because polymer resins which are not soluble in solvents can be used as well.

Recently, fine-particle powder coatings have been developed which exhibit uniform adhesion even in a dented portion of an object to be coated, and they allow smooth work surfaces to be produced which are just as good as those produced by solvent coatings do. Thus, it has become possible to produce thin films which was hard to attain with conventional powder coatings, and the amount of coatings used can be significantly reduced, thereby resolving the disadvantages of powder coatings which are relatively expensive.

Accordingly, powder coatings are increasingly used and in demand in household appliances, kitchen equipment, office equipment, building materials, automotive parts, pipes, mechanical parts, electronic components, steel furniture, and so on.

Resins used in powder coatings may be roughly divided into epoxy resins and polyester resins. In general, epoxy powder coatings using bisphenol-A epoxy resins, polyester powder coatings using a triglycidyl isocyanurate hardener, and epoxy-polyester hybrid powder coating systems are used. They have good mechanical properties and chemical properties, but cure at high temperatures, which requires more heat energy to be applied onto thick metal materials, of which it is hard to raise the temperatures, and therefore leads to a significant energy loss. Another problem is that they are hardly applicable on heat-sensitive materials such as middle density fiberboards (MDF). Therefore, there arises a need for the development of low-temperature curable powder coatings that can be stably cured at 110 to 130 °C which are curing temperatures required for objects to be coated such as woodworking materials.

In regard to the low-temperature curable powder coatings, there have been developed products so far that cure at 120 to 130 °C/15-20min, but they tend to be much inferior in outer appearance, impact resistance, and solvent resistance, compared to powder coatings that are cured under a typical curing condition (150 -180°C/10-15min).

### [Disclosure]

### [Technical Problem]

The present disclosure provides a method for manufacturing an ultra-low-temperature, fast-curable epoxy resin that provides various physical properties, such as mechanical properties and chemical properties unique to epoxy resins, even if they are cured at low temperatures, and a powder coating composition comprising an epoxy resin manufactured thereby.

### [Technical Solution]

To accomplish the foregoing technical aspect, the present disclosure provides a method for manufacturing a low-temperature curable epoxy resin of the following Chemical Formula 1 by synthesizing an oligomer using an organic acid containing one or more phenol groups and an alcohol containing three or more hydroxy groups and reacting the synthesized oligomer and a bisphenol resin with a bisphenol epoxy resin of the following Chemical Formula 2: 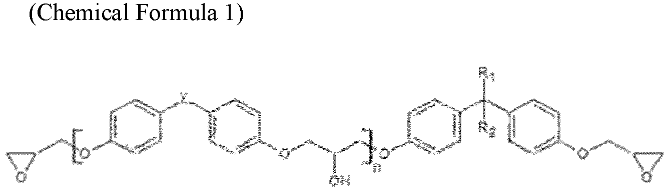 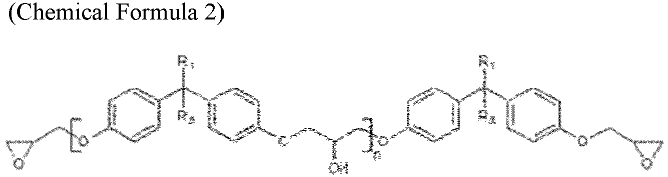
where n is a real number from 0.1 to 30, R1 and R2 are each independently a hydrogen, substituted or unsubstituted alkyl group having 1 to 5 carbon atoms, and X is an ester linkage containing 1 or more hydroxy groups or an CR₁R₂ group, and 20 to 30 % of X is an ester linkage containing a hydroxy group.
where the alkyl group having 1 to 5 carbon atoms represented by R1 and R2 may be methyl, ethyl, propyl, or butyl, for example. Particularly, 25 to 30 % of X contains a hydroxy group.

Here, n and X represent mean values.

If n is less than 0.1 or the hydroxy group content in X is less than 20 %, the content of reactive group(s) participating in a curing reaction is small and therefore no satisfactory curability or coating physical properties are achieved, which is undesirable.

Furthermore, in the above, the bisphenol epoxy resin may have an epoxy equivalent weight of 150 to 300 g/eq, preferably, 180 to 250 g/eq, and the bisphenol resin may be bisphenol-A or/and bisphenol-F.

Furthermore, in the above, the bisphenol epoxy resin may be 60 to 80 parts by weight, the synthesized oligomer may be 15 to 30 parts by weight, and the bisphenol resin may be 5 to 15 parts by weight, all of which react at 150 °C under an injected inert gas. The reaction time is 2 to 5 hours. The epoxy resin produced by the reaction may have an equivalent weight of 400 to 1,000 g/eq.

Furthermore, in the above, the oligomer may be produced by reacting a monocarboxylic acid containing a phenol group or a derivative thereof with an aliphatic or alicyclic polyalcohol having 3 to 4 hydroxy groups.

Furthermore, in the above, the oligomer may be an oligomer containing a hydroxy group and a phenol group that is synthesized by removing condensate by injecting an inert gas using a reactive catalyst and reacting them at a temperature of about 200 to 230 °C, more preferably, 220 to 230 °C.

Furthermore, in the above, the monocarboxylic acid containing a phenol group or the derivative thereof may be 65 to 75 parts by weight, and the aliphatic or alicyclic polyalcohol having 3 to 4 hydroxy groups may be 25 to 35 parts by weight.

Furthermore, in the above, the monocarboxylic acid containing a phenol group or the derivative thereof may be selected from a group consisting of 4-hydroxyphenyl acetic acid, diphenolic acid, 4-hydroxybenzoic acid, and combinations thereof, and the aliphatic polyalcohol may be selected from a group consisting of trimethylolpropane, trimethylolethane, glycerol, 3-hydroxy-2-(hydroxymethyl)-2-methyl propanoate, sorbitol, and combinations thereof.

Furthermore, in the above, the acid value of the oligomer may be 0 to 4 mg KOH/g, preferably, 0 to 2 mg KOH/g, and the number average molecular weight (Mn) thereof may be 500 to 1,500, preferably 600 to 1,200.

In another aspect, the present disclosure provides a powder coating composition comprising a phenolic hardener or a 2-cyanoguanidine or polyester hardener in an amount of 2 to 200 parts by weight per 100 parts by weight of an epoxy resin manufactured by the above-described method.

Furthermore, in the above, the epoxy resin of Chemical Formula 1 manufactured by the above method may have a gel time of 2 minutes 20 seconds or shorter at 110 to 130 °C since the degree of bonding to the hardener should be high enough.

Furthermore, in the above, the powder coating composition may further comprise one or more selected from a group consisting of a pigment, a filler, an optical stabilizer, a hardening accelerator, a flow enhancer, and a defoamer.

Hereinafter, the present disclosure will be described in detail.

An epoxy resin manufactured by a method of the present disclosure may be used as a liquid epoxy resin of a general solvent type, particularly, a powder coating resin.

The low-temperature curable epoxy resin of Chemical Formula 1 of the present disclosure may be an ultra-low-temperature, fast-curable epoxy resin that is manufactured by synthesizing an oligomer using an organic acid containing one or more phenol groups and an alcohol containing three or more hydroxy groups and additionally polymerizing the synthesized oligomer to a bisphenol epoxy resin of Chemical Formula 2:
More specifically, the method for manufacturing an epoxy resin may include: synthesizing an oligomer having a predetermined number average molecular weight by reacting a monocarboxylic acid containing a phenol group or a derivative thereof with an aliphatic or alicyclic polyalcohol having 3 to 4 hydroxy groups; and manufacturing an epoxy resin having a predetermined epoxy resin equivalent weight and a predetermined number average molecular weight by additionally polymerizing the synthesized oligomer and a bisphenol resin to a bisphenol epoxy resin at a predetermined ratio.

In the synthesizing of an oligomer, a monocarboxylic acid containing a phenol group or a derivative thereof and an aliphatic or alicyclic polyalcohol having 3 to 4 hydroxy groups may be used. Preferably, a reactive catalyst may be used in the synthesis of an oligomer, and an oligomer containing a hydroxy group and a phenol group may be synthesized by removing condensate by injecting an inert gas and reacting it at a temperature of about 200 to 230 °C, more preferably, 220 to 230 °C.

In one exemplary embodiment, in the synthesis of an oligomer, 65 to 75 parts by weight of a monocarboxylic acid containing a phenol group or a derivative thereof and 25 to 35 parts by weight of an aliphatic or alicyclic polyalcohol having 3 to 4 hydroxy groups may be used.

The acid value of the manufactured oligomer may be 0 to 4 mg KOH/g, preferably, 0 to 2 mg KOH/g, and the number average molecular weight (Mn) thereof may be 500 to 1,500, preferably 600 to 1,200.

The monocarboxylic acid containing a phenol group or the derivative thereof which is used in the synthesis of an oligomer may be selected from a group consisting of, but not limited to, 4-hydroxyphenyl acetic acid, diphenolic acid, 4-hydroxybenzoic acid, and combinations thereof.

In the synthesis of an oligomer, approximately 65 to 75 parts by weight of the monocarboxylic acid containing a phenol group or the derivative thereof may be added. If the content of the monocarboxylic acid containing a phenol group or the derivative thereof is less than 65 parts by weight, good flowability may be provided, but the mechanical strength and chemical resistance of a final epoxy resin may be lowered.

In the synthesis of an oligomer, the aliphatic polyalcohol may be a polyalcohol having 3 to 4 hydroxy groups. Although the present disclosure is not limited to the following, the aliphatic polyalcohol that may be used according to the present disclosure may be selected from a group consisting of trimethylolpropane, trimethylolethane, glycerol, 3-hydroxy-2-(hydroxymethyl)-2-methyl propanoate, sorbitol, and combinations thereof. In one exemplary embodiment, in the synthesis of an oligomer, the content of these polyalcohols may be 25 to 35 parts by weight.

The bisphenol epoxy resin of Chemical Formula 2 applied as a starting material in the manufacture of the low-temperature curable epoxy resin of Chemical Formula 1 of the present disclosure may preferably have an epoxy equivalent weight of 150 to 300 g/eq, more preferably, 180 to 250 g/eq.

Although the present disclosure is not limited to the following, the bisphenol epoxy resin and bisphenol resin used in the method of the present disclosure may be bisphenol-A or/and bisphenol-F.

In one exemplary embodiment, in the synthesis of the epoxy resin of Chemical Formula 1, 60 to 80 parts by weight, preferably, 65 to 75 parts by weight, of the bisphenol epoxy resin of Chemical Formula 2, 15 to 30 parts by weight, preferably 20 to 25 parts by weight, of the oligomer, and 5 to 15 parts by weight, preferably 5 to 10 parts by weight, of the bisphenol resin may be added and reacted at 150 °C under an injected inert gas. The reaction time is 2 to 5 hours.

A final epoxy resin manufactured according to the exemplary embodiment of the present disclosure may have an initial equivalent weight of 500 to 750 g/eq, a melt viscosity of 1,500 to 7,000 cps (150 °C, Brookfield viscosity meter), a softening point of 80 to 95 °C, and a number average molecular weight (Mn) of 1,000 to 4,000, and n is 1 to 30.

The alkyl group having 1 to 5 carbon atoms represented by R in Chemical Formula 1 may be methyl, ethyl, propyl, and butyl, for example. Also, n represents a number from 0.1 to 30, particularly, 1 to 15, X is represented by an ester linkage containing 1 or more hydroxy groups or a CR₁R₂ group, and 20 to 30 %, more preferably, 25 to 30 %, of X may be an ester linkage containing a hydroxy group. If n is less than 0.1 or the ester linkage containing the hydroxyl group(s) of X is less than 20 %, the content of group(s) reacting with a hardener is small and therefore no satisfactory low-temperature curability or coating physical properties are achieved, which is undesirable.

In another aspect, the present disclosure provides a powder coating composition using the epoxy resin.

Epoxy resins for general powder coating have good mechanical properties but are cured at high temperatures. To solve this problem, the powder coating composition of the present disclosure uses the low-temperature curable epoxy resin of Chemical Formula 1 which is a polyfunctionalized epoxy resin, thereby complementing the low-temperature curability while maintaining the existing physical properties of the powder coating obtained by curing at 150 to 180 °C for 15 minutes.

The powder coating composition of the present disclosure uses a polyfunctional and low-temperature curable epoxy resin of Chemical Formula 1 as a base compound and uses bisphenol-A or a polyester resin as a hardener.

The bisphenol-A hardener or polyester hardener used in the powder coating composition of the present disclosure may be used in an amount of 2 to 200 parts by weight per 100 parts by weight of the polyfunctional epoxy resin of Chemical Formula 1. This is to make the functional groups of the base compound and hardener fully reacted by an equivalent reaction so that no unreacted functional group is left.

Preferably, the epoxy resin of Chemical Formula 1 contained in the powder coating composition of the present disclosure may have an epoxy equivalent weight of 400 to 800 g/eq.

The polyester hardener used as a hardener in the powder coating composition is commonly used in powder coating compositions in the art, and is not specifically limited as long as it contains a carboxyl group that can participate in a curing reaction with an epoxy resin and may preferably have a glass transition temperature of 50 to 65 °C and an acid value of 30 to 80.

Examples of the polyester hardener that are commercially available include Product name HC-5602 (manufactured by INOPOL in South Korea), Product name HC-5401 (manufactured by INOPOL in South Korea), Product name HC-5501 (manufactured by INOPOL in South Korea), Product name HC-6812 (manufactured by INOPOL in South Korea), and so on.

Moreover, the bisphenol-A hardener used as the hardener in the powder coating composition of the present disclosure is commonly used in powder coating compositions in the art, and has a phenolic OH group at an end, and the equivalent weight of the bisphenol hardener may be preferably 200 to 800.

Examples of the bisphenol-A hardener that are commercially available include Product name KD-410J (manufactured by Kukdo Chemical), Product name KD-407 (manufactured by Kukdo Chemical), Product name KD-404J (manufactured by Kukdo Chemical), Product name KD-420 (manufactured by Kukdo Chemical), and so on.

The powder coating composition of the present disclosure preferably contains a predetermined amount of defoamer well known in the art. The defoamer acts to suppress the formation of foam on coating surfaces, and its content is preferably 0.1 to 20 parts by weight relative to the total weight. If the content of the defoamer is out of this range, the physical properties are adversely affected.

A leveling agent used in the powder coating composion of the present disclosure gives smoothness to coating films and its content is preferably 0.1 to 20 parts by weight. If the content of the leveling agent is out of this range, the mechanical properties also are adversely affected.

The powder coating composition of the present disclosure may further comprise a well-known additive that is usually added to the powder coating composition in the art, apart from the above components. These additives include a pigment, a filler, an optical stabilizer, a hardening accelerator, a flow enhancer, and a defoamer.

In an exemplary embodiment of the present disclosure, it is preferable that the powder coating composition further comprises one or more selected from a group consisting of a pigment, an anti-pinhole agent, and a hardening accelerator.

### [Advantageous Effects]

A powder coating comprising an epoxy resin synthesized according to the present disclosure is stably cured even at an ultra-low temperature, e.g., 110 to 130 °C, and therefore the physical properties required for the powder coating, including mechanical and chemical properties, may be equally as good as or better than the physical properties of conventional bisphenol epoxy resins used in existing powder coating systems.

Particularly, conventional polyfunctional epoxy resins exhibit poor mechanical properties although they are stably curable at ultra-low temperatures, making it difficult to use alone on a powder coating system, whereas the epoxy resin synthesized according to the present disclosure can be stably cured under the same curing condition (ultra-low temperatures) and exhibit good mechanical strength and outer appearance.

Moreover, a powder coating using the epoxy resin synthesized according to the present disclosure exhibits excellent ultra-low-temperature curability and therefore can be used for thick metal coating materials, of which it is hard to raise the temperatures, and for woodworking materials such as MDFs which are sensitive to heat, thus enabling sufficient curing with a small amount of energy and, as a result, bringing more anticipated advantages in terms of environmental protection.

### [Mode for Invention]

Hereinafter, the present disclosure will be described in more details through an exemplary embodiment.

### [Synthesis Example 1]: Manufacture of Oligomer

795 g of 4-hydroxyphenyl acetic acid, 352.5 g of trimethylolpropane, and 2.295 g of a metallic organotin compound (AP-CAT0041, FTC Korea) as a catalyst were put into a four-neck flask where a condenser with a nitrogen gas pipe and a cooling device, an agitator, a thermometer, and a heater were installed, and the temperature was gradually raised. When the temperature reached 100 °C or higher, condensate flowed out and its temperature was raised up to about 220 to 230 °C to induce a reaction, thereby manufacturing an oligomer with an acid value of 2 mg KOH/g or lower and a number average molecular weight of 799.

### [Synthesis Example 2]: Manufacture of Epoxy Resin

69.42 g of bisphenol-A epoxy resin (YD-128, Kukdo Chemical), 21.38 g of the synthesized oligomer produced in Synthesis Example 1, 9.2 g of bisphenol-F resin, and 0.046 g of ethyl triphenyl phosphonium iodine were put into a four-neck flask where a condenser with a nitrogen gas pipe and a cooling device, an agitator, a thermometer, and a heater were installed, and the temperature was gradually raised. After reacting them at 150 °C for 4 hours, an epoxy resin was manufactured which had an epoxy equivalent weight of 646.3 g/eq, a melt viscosity of 3,079 cps at 150 °C, a softening point of 85 °C, and a number average molecular weight of 1,608.

### [Synthesis Example 3-6]: Manufacture of Epoxy Resin

An epoxy resin was synthesized by applying the procedure of Synthesis Example 2, except that the components and contents given in the following Table 1 were used.

**[Table 1]**

| Components for epoxy resin synthesis and their contents | | | | | |
|---|---|---|---|---|---|
| Components | Synthesis Examples (g) | | | | |
| | 2 | 3 | 4 | 5 | 6 |
| YD-128 (epoxy equivalent weight of 187) | 69.42 | 69.8 | 70.71 | 67.04 | 67.83 |
| Oligomer of Synthesis Example 1 | 21.38 | 30.5 | 19.29 | 26.46 | 25.67 |
| Bisphenol F | 92 | - | 10 | 6.5 | 6.5 |
| ETPPI^{∗} | 0.046 | 0.031 | 0.029 | 0.033 | 0.048 |
| ^{∗}Ethyl triphenyl phosphonium iodine | | | | | |

### [Text Example 1]: Measurement of Physical Properties of Epoxy Resin

The physical properties of the epoxy resins of the present disclosure manufactured in Synthesis Examples 2 to 6 were measured. Their equivalent weights were measured using a 0.2N-HCl Dioxane solution, and their melt viscosities (cps) were measured at 150 °C using a Brookfield viscometer. Their softening points were measured using a ring-and-ball method, and their number average molecular weights were analyzed by gel permeation chromatography. The results of the physical properties of the epoxy resins measured according to this test are shown in the following Table 2.

**[Table 2]**

| Physical Properties of Epoxy Resins | | | | | |
|---|---|---|---|---|---|
| Components | Synthesis Examples (g) | | | | |
| | 2 | 3 | 4 | 5 | 6 |
| Equivalent weight [g/eq] | 646.3 | 507 | 607.8 | 691 | 652.7 |
| Melt viscosity [cps] | 3079 | 1750 | 1450 | 4317 | - |
| Softening point [°C] | 85.0 | 71.9 | 75.7 | 88.9 | 96.3 |
| Number average molecular weight [Mn] | 1608 | 1238 | 1197 | 1892 | 2189 |

### [Test Example 2]: Measurement of Gel Time of Epoxy Resins

The gel times of the epoxy resins of the present disclosure manufactured in Synthesis Examples 2 to 6 were measured after the components were mixed according to the compositions in Table 3. A bisphenol-A hardener (KD-410J, Kukdo Chemical) or a polyester hardener (HC-5501, INOPOL) was used as the hardener.

**[Table 3]**

| Gel Times of Epoxy Resins | | | | | | |
|---|---|---|---|---|---|---|
| Components | Embodiments (g) | | | | | |
| | 1 | 2 | 3 | 4 | 5 | 6 |
| Synthesis Example 2 | 7.17 | | | | | |
| Synthesis Example 3 | | 8.00 | | | | |
| Synthesis Example 4 | | | 8.88 | | | |
| Synthesis Example 5 | | | | 9.45 | 14.55 | |
| Synthesis Example 6 | | | | | | 14.38 |
| KD-410J | 2.83 | | | | 5.45 | 5.62 |
| HC-5501 | | 12.00 | 11.12 | 10.55 | | |
| 2-MI^{∗} | 0.1 | | | | | |
| ^{∗}2-methly imidazole | | | | | | |

| Gel time | Embodiment (mins' secs") | | | | | |
|---|---|---|---|---|---|---|
| | 1 | 2 | 3 | 4 | 5 | 6 |
| 120 °C | 1'48" | 3'42" | 6'53" | 4'47" | 3'32" | 3'08" |
| 110°C | 2'27" | | | | 5'17" | 4'21" |

The gel time of the epoxy resin of the present disclosure of Synthesis Example 2 and the gel time of 650 to 725 g/eq of a bisphenol-A epoxy resin (KD-242G, Kukdo Chemical) for general-use powder coatings were measured after the components were mixed according to the compositions in Table 4. A bisphenol-A hardener (KD-410J, Kukdo Chemical) or a polyester hardener (HC-5602, INOPOL) was used as the hardener.

**[Table 4]**

| Measurement of Gel Times of Epoxy Resins | | | | |
|---|---|---|---|---|
| Components | Embodiments (g) | | Comparative Examples (g) | |
| | 7 | 8 | 1 | 2 |
| Epoxy resin of Synthesis Example 2 | 7.23 | 4.592 | | |
| KD-242G | | | 7.293 | 4.671 |
| KD-410J | 2.77 | | 2.707 | |
| HC-5602 | | 5.408 | | 5.329 |
| 2-MI | 01. | 0.1 | 0.1 | 0.1 |

| Gel Time | Embodiment (mins' secs") | | | |
|---|---|---|---|---|
| 150°C | 41.16" | 52.94" | 1'12" | 1'30" |
| 130°C | 1'11" | 1'29" | 2'24" | 2'54" |
| 120°C | 1'46" | 2'11" | 2'35" | 3'57" |
| 110°C | 2'20" | | 4'22" | |

As shown in Table 4, the measurement results of the gel times at different curing temperatures of the epoxy resin manufactured according to the method of the present disclosure and the bisphenol-A epoxy resin for general-use powder coatings showed that the gel times in Embodiments 7 and 8 were much shorter than those in Comparative Examples 1 and 2.

The gel time required to bind the epoxy resin and the hardener to a sufficiently high degree is preferably 2 minutes 20 seconds or shorter. At ultra-low temperatures (110 to 130 °C), the gel times in Embodiments 7 and 8 were short enough to satisfy the above requirement, whereas the gel times in Comparative Examples 1 and 2 were longer.

### [Test Example 3]: Manufacture of Powder Coatings

A powder coating composition was manufactured as shown in the following Table 5 by using the epoxy resin manufactured in Synthesis Example 2. A bisphenol-A hardener (KD-410J, Kukdo Chemical) or a polyester hardener (HC-5602, INOPOL) was used as the hardener. Examples 9 and 10 used the epoxy resin manufactured by Synthesis Example 2 of the present disclosure, and Comparative Examples 3 and 4 used 650 to 725 g/eq of the bisphenol-A epoxy resin for general-use powder coatings (KD-242G, Kukdo Chemical).

**[Table 5]**

| Manufacture of Powder Coatings | | | | |
|---|---|---|---|---|
| Components | Embodiments (g) | | Embodiments (g) | |
| | 9 | 10 | 3 | 4 |
| Epoxy resin of Synthesis Example 2 | 216.9 | 137.8 | | |
| KD-242G | | | 217.7 | 141 |
| KD-410J | 83.1 | | 82.3 | |
| HC-5602 | | 162.2 | | 159 |
| Benzoin | 2 | 2 | 2 | 2 |
| TiO₂ | 150 | 150 | 150 | 150 |
| BaSO₄ | 48 | 48 | 48 | 48 |
| 2-MI | 3 | 3 | 3 | 3 |

| | | | | |
|---|---|---|---|---|
| Benzoin: Anti-pinhole agent TiO₂: White pigment BaSO₄: Extender pigment | | | | |

The components were mixed according to the compositions shown in Table 5 and then the mixture was passed through an extruder to get the components completely mixed. The obtained substance was broken into fine particles and then applied onto metal surfaces using a Nordson Encore^{®}LT electrostatic spray gun (60 kV), thus forming coating films.

### [Test Example 4: Measurement of Physical Properties of Powder Coatings]

The powder coatings of Embodiments 9 and 10 manufactured as shown in Table 5 were used for curing on metal surfaces at 110 °C/10 mins, 120 °C/10 mins, and 130 °C/10mins, and the powder coatings of Comparative Examples 3 and 4 were used for curing on metal surfaces at 110 °C, 120 °C, 130 °C, and 180 °C, thereby manufacturing coating specimens with a coating thickness of 60 to 80 µm. The outer appearance and mechanical properties of the manufactured coating specimens were measured, and the results were shown in Tables 6 and 7.

**[Table 6]**

| Physical Properties of Powder Coating Films (Embodiments of the Disclosure) | | | | | | | |
|---|---|---|---|---|---|---|---|
| Physical properties | | Embodiments | | | | | |
| | | 9-1 | 10-1 | 9-2 | 10-2 | 9-3 | 10-3 |
| Curing condition | | 110°C/min | | 120°C/min | | 130°C/min | |
| Outer appearance | Pinhole | Good | Good | Good | Good | Good | Good |
| | Gloss | 90 | 37 | 109 | 61 | 106 | 90 |
| Mechanical properties | Adhesion | 100/100 | 100/100 | 100/100 | 100/100 | 100/100 | 100/100 |
| | Flexibility | 7.2 mm | 1.05 mm | 8.89 mm | 7.84 mm | 9.34 mm | 9.52 mm |
| | Impact | 500g/50cm | 500g/50cm | >500g/100 cm | 500g/55cm | >500g/100 cm | >500g/100 cm |
| | Hardness | F | HB | F | HB | F | HB |

**[Table 7]**

| | Physical Properties of Powder Coating Films (Comparative Examples) | | | | | | | | | |
|---|---|---|---|---|---|---|---|---|---|---|
| Physical properties | | | Comparative Examples | | | | | | | |
| | | | 3-1 | 4-1 | 3-2 | 4-2 | 3-3 | 4-3 | 3-4 | 4-4 |
| Curing condition | | | 110°C/min | | 120°C/min | | 130°C/min | | 180°C/min | |
| Outer appearance | | Pinhole | Good | Good | Good | Good | Good | Good | Good | Good |
| | | Gloss | 120 | 94.1 | 120 | 88.2 | 120 | 98.4 | 116 | 97.8 |
| Mechanica 1 properties | | Adhesion | 100/100 | 70/100 | 100/100 | 100/100 | 100/100 | 100/100 | 100/100 | 100/100 |
| | | Flexibilit y | 0.4 mm | 0.69 mm | 0.78 mm | 0.97 mm | 2.76 mm | 8.54 mm | 8.02 mm | 8.62 mm |
| | | Impact | 500g/10 cm | 500g/10 cm | 500g/15 cm | 500g/30 cm | 500g/30 cm | 500g/30 cm | 500g/50 cm | 500g/10 0cm |
| | | Hardness | 2B | HB | HB | HB | HB | F | HB | HB |

As shown in Tables 6 and 7, powder coatings obtained by using the epoxy resin manufactured according to the method of the present disclosure and the bisphenol-A epoxy resin for general-use powder coatings having a conventional 150-180°C curing system were cured in the same manner under a low-temperature curing condition. The results showed that the physical properties of the coating films obtained by curing at 110 °C (Embodiment 9-1) which is an ultra-low temperature, satisfied all of the outer appearance and mechanical property requirements for the current powder coating market, and that especially the coating films obtained by curing at 120 °C or higher (Embodiments 9-2 and 9-3) exhibited far better mechanical properties than the powder coatings obtained by curing under the conventional curing condition (Comparative Examples 3-4). The coating film according to Embodiment 10-2 in which the curing was performed at 120 °C exhibited similar mechanical properties to the coating film according to Comparative Example 4-4 in which the curing was performed at 180 °C.

On the other hand, the coating films according to Comparative Examples 3-1, 3-2, 3-3, 4-1, 4-2, and 4-3 exhibited a poor impact resistance of 500 g/50 cm or lower under a low-temperature curing condition and showed similar differences in flexibility.

Although the present disclosure has been described above with respect to particular modes of practice and exemplary embodiments of the present disclosure, the present disclosure is not limited to the techniques described in the foregoing embodiments. Rather, various changes and modifications may be made based on the foregoing embodiments so that best powder coatings according to the present disclosure that have physical properties required for the powder coating market can be obtained by means of an ultra-low temperature curing system of 110 °C/min. However, it will be evident from the appended claims that all of these changes and modifications fall within the scope of the present disclosure.

## Claims

1. A method for manufacturing a low-temperature curable epoxy resin of the following Chemical Formula 1 by synthesizing an oligomer using an organic acid containing one or more phenol groups and an alcohol containing three or more hydroxy groups and reacting the synthesized oligomer and a bisphenol resin with a bisphenol epoxy resin of the following Chemical Formula 2: 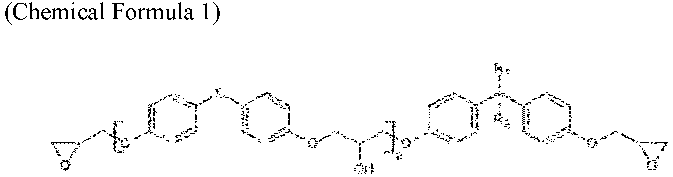 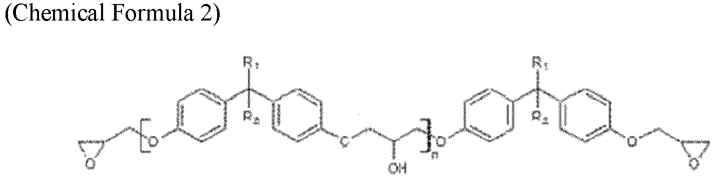 where n is a real number from 0.1 to 30, R1 and R2 are each independently a hydrogen, substituted or unsubstituted alkyl group having 1 to 5 carbon atoms, and X is an ester linkage containing 1 or more hydroxy groups or 20 to 30 % of X as an CR₁R₂ group is an ester linkage containing a hydroxy group.

2. The method of claim 1, wherein the bisphenol epoxy resin has an epoxy equivalent weight of 150 to 300 g/eq, preferably, 180 to 250 g/eq, and the bisphenol resin is bisphenol-A or/and bisphenol-F.

3. The method of claim 1, wherein the bisphenol epoxy resin is 60 to 80 parts by weight, the synthesized oligomer is 15 to 30 parts by weight, the bisphenol resin is 5 to 15 parts by weight, and the epoxy resin has an equivalent weight of 400 to 1,000 g/eq.

4. The method of claim 1, wherein R1 and R2 of the epoxy resin in Chemical Formulae 1 and 2 are hydrogen or methyl, and n is a real number from 1 to 15.

5. The method of claim 1, wherein the oligomer is produced by reacting a monocarboxylic acid containing a phenol group or a derivative thereof with an aliphatic or alicyclic polyalcohol having 3 to 4 hydroxy groups.

6. The method of claim 5, wherein the monocarboxylic acid containing a phenol group or the derivative thereof is 65 to 75 parts by weight, and the aliphatic or alicyclic polyalcohol having 3 to 4 hydroxy groups is 25 to 35 parts by weight.

7. The method of claim 5 or 6, wherein the monocarboxylic acid containing a phenol group or the derivative thereof is selected from a group consisting of 4-hydroxyphenyl acetic acid, diphenolic acid, 4-hydroxybenzoic acid, and combinations thereof, and the aliphatic polyalcohol is selected from a group consisting of trimethylolpropane, trimethylolethane, glycerol, 3-hydroxy-2-(hydroxymethyl)-2-methyl propanoate, sorbitol, and combinations thereof.

8. The method of claim 5 or 6, wherein the acid value of the oligomer is 0 to 4 mg KOH/g, preferably, 0 to 2 mg KOH/g, and the number average molecular weight (Mn) thereof is 500 to 1,500, preferably 600 to 1,200.

9. A powder coating composition comprising a phenolic hardener or a 2-cyanoguanidine or polyester hardener in an amount of 2 to 200 parts by weight per 100 parts by weight of an epoxy resin manufactured by the method of any one of claims 1 to 6.

10. The powder coating composition of claim 9, further comprising one or more selected from a group consisting of a pigment, a filler, an optical stabilizer, a hardening accelerator, a flow enhancer, and a defoamer.
